# EUROPEAN PATENT APPLICATION

(11) **EP 4 814 482 A1**
(43) Date of publication of application: **30.09.2026**
(21) Application number: 26167778.5
(22) Date of filing: 25.03.2026
(51) Int. Cl.: G01N 27/447, G01N 35/00

(54) **SAMPLE ANALYSIS DEVICE AND METHOD FOR CONTROLLING SAME**

(30) Priority: 27.03.2025 CN 202510381467
(71) Applicant: GeneMind Biosciences Company Limited, Shenzhen City, Guangdong 518023 (CN)
(72) Inventor: Wang, Penglei, Shenzhen City, 518023 (CN); Wang, Guangming, Shenzhen City, 518023 (CN); Li, Xiangyu, Shenzhen City, 518023 (CN); Wu, Ping, Shenzhen City, 518023 (CN); Zhou, Zhiliang, Shenzhen City, 518023 (CN)
(74) Representative: Schiweck Weinzierl Koch Patentanwälte Partnerschaft mbB

(57) **Abstract**

The present application discloses a sample analysis device and a method for controlling the same. The sample analysis device includes an electrophoresis mechanism and an imaging mechanism. The electrophoresis mechanism includes an electrophoresis component and a mounting component. The electrophoresis component includes a probe, and the probe is configured to contact a chip to apply a voltage to the chip. The mounting component includes a fixing base and a latching assembly; the latching assembly is movably connected to the fixing base, and the latching assembly is configured to abut against or separate from the electrophoresis component. When the latching assembly abuts against the electrophoresis component, the latching assembly locks the electrophoresis component on the mounting component; and when the latching assembly separates from the electrophoresis component, the electrophoresis component is capable of moving relative to the fixing base. The imaging mechanism is configured to, after electrophoretic separation of a sample in the chip is completed, photograph and image the sample. The latching assembly is movably connected to the fixing base. By driving the latching assembly to move, the electrophoresis component can abut against or separate from the latching assembly, thereby making the electrophoresis component easy to disassemble and assemble and convenient to replace, and further facilitating the repair and replacement of the probe.

## Description

### TECHNICAL FIELD

The present application relates to the field of gene sequencing, and in particular, to a sample analysis device and a method for controlling the same.

### BACKGROUND

In the process of molecular biology research and application, analyzers are typically utilized to perform electrophoresis analysis on samples containing biological substances such as DNA, RNA, or proteins via electrophoresis technology. When performing electrophoresis on a chip, an electrophoresis component of the analyzer first contacts the chip via a probe; after the electrophoresis is completed, the probe is separated from the chip. If a probe is damaged, power cannot be supplied to the chip. Since the electrophoresis component is provided with a plurality of probes and the arrangement is relatively dense, it is relatively difficult to repair a part of the probes individually; therefore, the electrophoresis component is usually disassembled and replaced as a whole. However, in the related art, the electrophoresis component is not easy to disassemble, making replacement inconvenient.

### SUMMARY

The present application provides a sample analysis device and a method for controlling the same.

The sample analysis device according to embodiments of the present application includes an electrophoresis mechanism and an imaging mechanism. The electrophoresis mechanism includes an electrophoresis component and a mounting component. The electrophoresis component includes a probe, and the probe is configured to contact a chip to apply a voltage to the chip. The mounting component includes a fixing base and a latching assembly; the latching assembly is movably connected to the fixing base, and the latching assembly is configured to abut against or separate from the electrophoresis component. When the latching assembly abuts against the electrophoresis component, the latching assembly locks the electrophoresis component on the mounting component; and when the latching assembly separates from the electrophoresis component, the electrophoresis component is capable of moving relative to the fixing base. The imaging mechanism is configured to, after electrophoretic separation of a sample in the chip is completed, photograph and image the sample.

In the sample analysis device according to the embodiments of the present application, the latching assembly is movably connected to the fixing base. By driving the latching assembly to move, the electrophoresis component can abut against or separate from the latching assembly, which facilitates the fixation of the electrophoresis component onto the fixing base or the disassembly of the electrophoresis component from the fixing base, thereby making the electrophoresis component easy to disassemble and assemble and convenient to replace, and further facilitating the repair and replacement of the probe.

The control method according to the embodiments of the present application is applicable to the sample analysis device. The control method includes:
controlling the motion mechanism to drive the chip to move toward the electrophoresis component locked by the mounting component, and causing the probe to contact the chip;
energizing the chip via the probe to cause the sample in the chip to undergo electrophoretic separation; and controlling the imaging mechanism to photograph and image the sample.

Additional aspects and advantages of the present application will in part be illustrated in the following description and become apparent from the following description, or may be learned by the implementation of the present application.

### BRIEF DESCRIPTION OF THE DRAWINGS

The aforementioned and/or additional aspects and advantages of the present application will become apparent and easily understood from the description of the embodiments with reference to the following drawings, in which:
FIG. 1 is a schematic structural diagram of a sample analysis device according to an embodiment of the present application;
FIG. 2 is a schematic structural diagram of an electrophoresis mechanism according to an embodiment of the present application;
FIG. 3 is a schematic structural diagram of an electrophoresis mechanism according to an embodiment of the present application;
FIG. 4 is a schematic structural diagram of an imaging mechanism according to an embodiment of the present application;
FIG. 5 is a schematic structural diagram of a motion mechanism according to an embodiment of the present application;
FIG. 6 is a schematic structural diagram of a sample analysis device according to an embodiment of the present application;
FIG. 7 is a schematic structural diagram of a base plate according to an embodiment of the present application;
FIG. 8 is a schematic structural diagram of a sample loading mechanism according to an embodiment of the present application;
FIG. 9 is a schematic structural diagram of a bracket and a sample rack according to an embodiment of the present application;
FIG. 10 is a schematic structural diagram of a bracket and a sample rack according to an embodiment of the present application;
FIG. 11 is a schematic cross-sectional view taken along direction A-A of FIG. 10;
FIG. 12 is a schematic structural diagram of a sample analysis device according to an embodiment of the present application;
FIG. 13 is a schematic flowchart of a method for controlling a sample analysis device according to an embodiment of the present application;
FIG. 14 is a schematic flowchart of a method for controlling a sample analysis device according to an embodiment of the present application; and
FIG. 15 is a schematic flowchart of a method for controlling a sample analysis device according to an embodiment of the present application.

### DETAILED DESCRIPTION

Embodiments of the present application are described in detail below, and the examples of the embodiments are shown in the drawings, throughout which identical or similar reference numerals represent identical or similar elements or elements having identical or similar functionality. The embodiments described below with reference to the drawings are exemplary and are merely intended to illustrate the present application, and should not be construed as limiting the present application.

In the description of the present application, it should be understood that orientational or positional relationships indicated by terms such as "central", "longitudinal", "transverse", "length", "width",
"thickness" , "upper" , "lower" , "front" , "rear" , "left" , "right" , "vertical" , "horizontal" , "top" , "bottom" , "inner" , "outer" , "clockwise" , or "counterclockwise" , are those shown on the basis of the drawings, and are merely intended to facilitate and simplify the description rather than indicate or imply that the indicated device or element must have a specific orientation and be configured and operated according to the specific orientation. Such relationships should not be construed as limiting the present application. In addition, the terms "first" and "second" are used herein for descriptive purposes only and should not be construed as indicating or implying relative importance or implicitly indicating the number of technical features described. Therefore, features defined with "first" and "second" may explicitly or implicitly include one or more of the features. In the description of the present application, unless otherwise clearly and specifically defined, the term "plurality" means two or more.

In the description of the present application, it should be noted that unless otherwise clearly specified and defined, the terms "mount" , "link" , and "connect" should be interpreted in their broad sense. For example, the connection may be a fixed connection, detachable connection, or integral connection; a mechanical connection, electric connection, or communicative connection; or a direct connection, indirect connection through an intermediate, internal communication of two elements, or interaction between two elements. For those of ordinary skill in the art, the specific meanings of the aforementioned terms in the present application can be interpreted according to specific conditions.

In the present application, unless otherwise clearly specified and defined, a first feature being "above" or "below" a second feature may include that the first and second features are in direct contact and that the first and second features are not in direct contact but are in contact via an additional feature therebetween.

Moreover, a first feature being "on" , "over" , and "above" a second feature includes that the first feature is right above or obliquely above the second feature, or simply means that the first feature is at a vertically higher position than the second feature. A first feature being "under", "beneath", and "below" a second feature includes that the first feature is right below or obliquely below the second feature, or simply means that the first feature is at a vertically lower position than the second feature.

The following disclosure provides many different embodiments or examples for implementing different structures of the present application. To simplify the disclosure of the present application, the components and settings of specific examples are described below. Certainly, the examples are merely exemplary and are not intended to limit the present application. In addition, reference numerals and/or characters may be repeatedly used in different examples in the present application for simplicity and clarity rather than to indicate the relationship between various embodiments and/or settings discussed. In addition, the present application provides examples of various specific processes and materials, but those of ordinary skill in the art will recognize the application of other processes and/or the use of other materials.

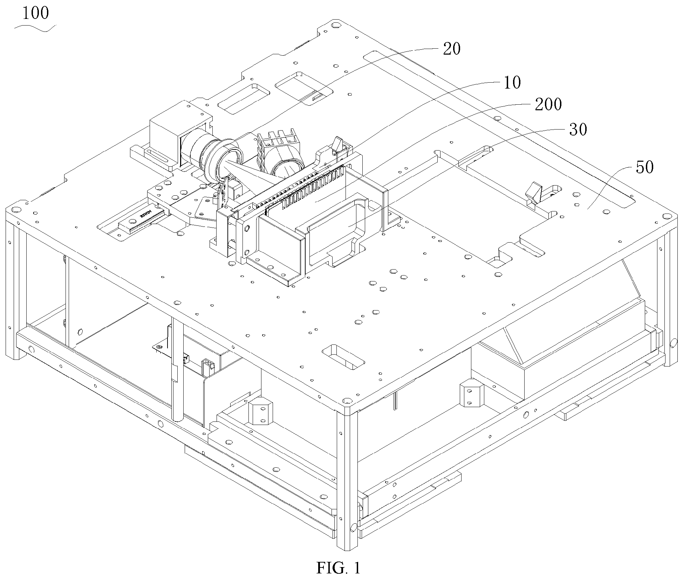

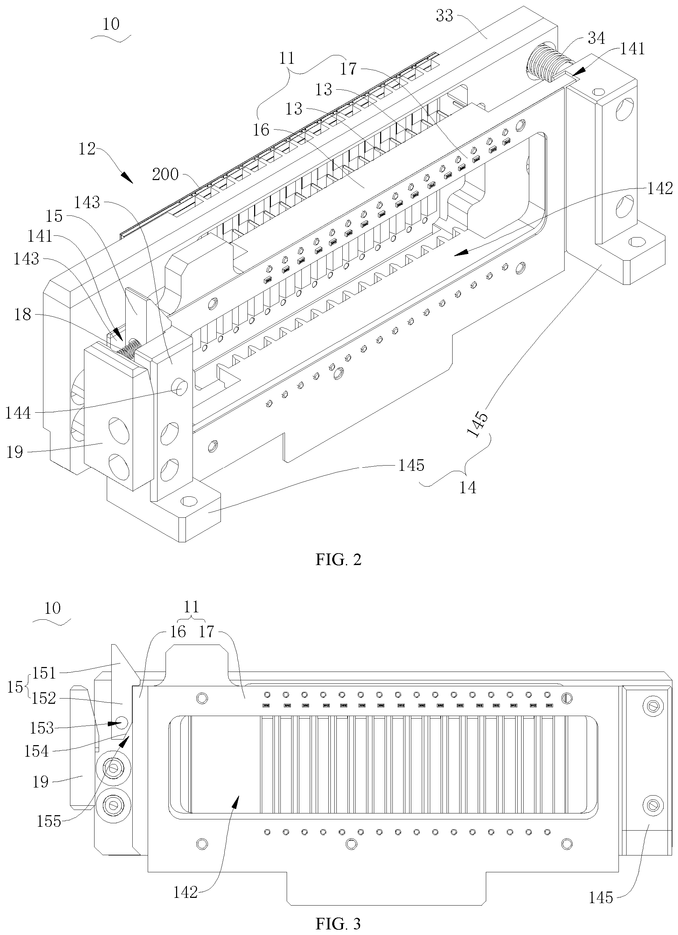

Referring to FIGs. 1 and 2, the sample analysis device 100 according to the embodiments of the present application includes an electrophoresis mechanism 10 and an imaging mechanism 20. The electrophoresis mechanism 10 includes an electrophoresis component 11 and a mounting component 12. The electrophoresis component 11 includes a probe 13, and the probe 13 is configured to contact a chip 200 to apply a voltage to the chip 200. The mounting component 12 includes a fixing base 14 and a latching assembly 15; the latching assembly 15 is movably connected to the fixing base 14, and the latching assembly 15 is configured to abut against or separate from the electrophoresis component 11. When the latching assembly 15 abuts against the electrophoresis component 11, the latching assembly 15 locks the electrophoresis component 11 onto the mounting component 12; when the latching assembly 15 is separated from the electrophoresis component 11, the electrophoresis component 11 is capable of moving relative to the fixing base 14. The imaging mechanism 20 is configured to, after a sample in the chip 200 completes electrophoretic separation, photograph and image the sample.

In the sample analysis device 100 according to the embodiments of the present application, the latching assembly 15 is movably connected to the fixing base 14. By driving the latching assembly 15 to move, the electrophoresis component 11 can abut against or separate from the latching assembly 15, which facilitates the fixation of the electrophoresis component 11 onto the fixing base 14 or the disassembly of the electrophoresis component 11 from the fixing base 14, thereby making the electrophoresis component 11 easy to disassemble and assemble and convenient to replace, and further facilitating the repair and replacement of the probe 13.

The sample analysis device 100 can perform electrophoresis analysis on samples containing biological substances such as DNA, RNA, or proteins via electrophoresis technology.

For example, for a nucleic acid sample containing DNA or RNA, the nucleic acid sample is first transferred into the chip 200, and the electrophoresis component 11 is fixed on the mounting component 12; further, the electrophoresis component 11 is fixed on the fixing base 14 via the latching assembly 15. The latching assembly 15 may be a single component or a combination of a plurality of components.

The electrophoresis component 11 applies a voltage to the nucleic acid sample in the chip 200, and the nucleic acid sample moves under the action of an electric field force. Since nucleic acid fragments of different lengths exist in the nucleic acid sample, differential separation of the nucleic acid fragments of different lengths is achieved, forming a plurality of bands.

After the nucleic acid sample completes the electrophoretic separation work, the imaging mechanism 20 photographs and images the nucleic acid sample, and analyzes the photograph obtained by photographing, thereby obtaining information such as the nucleic acid fragment length, concentration, and integrity corresponding to each band of the nucleic acid sample. For samples containing other biological substances, they can similarly be transferred to the chip 200, and then subjected to electrophoretic separation by the electrophoresis component 11 and photographing and imaging by the imaging mechanism 20; finally, the photograph obtained by photographing is analyzed to complete the analysis process.

Further, a molecular weight standard is loaded in the nucleic acid sample. The nucleic acid sample and the molecular weight standard undergo electrophoretic separation under the action of the electric field force. When subsequently performing analysis according to the obtained photograph, the bands separated from the molecular weight standard are used as a reference to compare the bands separated from the molecular weight standard with the bands separated from the nucleic acid sample, so as to calculate and obtain the nucleic acid fragment length, concentration, and nucleic acid integrity index corresponding to the bands separated from the nucleic acid sample. Certainly, it is possible to achieve that there is no need to load a molecular weight standard in the nucleic acid sample, and the nucleic acid fragment length, concentration, and nucleic acid integrity index corresponding to the bands separated from the nucleic acid sample are calculated and obtained directly according to the bands of the nucleic acid sample after electrophoretic separation.

Referring to FIGs. 2 and 3, in some embodiments, the latching assembly 15 includes a latching member 151 and a connecting member 152. The connecting member 152 is rotatably connected to the fixing base 14, and the latching member 151 is configured to abut against or separate from the electrophoresis component 11.

The latching member 151 and the connecting member 152 may be integrally formed, or may be fixedly connected by means of welding, bonding, or the like.

The connecting member 152 rotates relative to the fixing base 14, driving the latching member 151 to also rotate relative to the fixing base 14, which causes the latching member 151 to abut against or separate from the electrophoresis component 11. In this way, the convenience of disassembly and assembly of the electrophoresis component 11 can be improved.

Referring to FIGs. 2 and 3, in some embodiments, a sliding slot 141 and an accommodating space 142 are formed in the fixing base 14. The sliding slot 141 is in communication with the accommodating space 142. The electrophoresis component 11 is latched to the fixing base 14 by means of the sliding slot 141. The electrophoresis component 11 is located at least partially in the accommodating space 142, and the connecting member 152 is located at least partially in the sliding slot 141.

Since the sliding slot 141 is formed in the fixing base 14, the connecting member 152 is located in the sliding slot 141, and the latching member 151 is connected to the connecting member 152, latching the electrophoresis component 11 with the latching member 151 enables the electrophoresis component 11 to be latched to the fixing base 14 by means of the sliding slot 141.

A portion of the electrophoresis component 11 may be located in the accommodating space 142, and another portion of the electrophoresis component may be located in the sliding slot 141, or the entire electrophoresis component may be located in the accommodating space 142. A portion of the connecting member 152 may be located in the sliding slot 141, and another portion of the connecting member may be located in the accommodating space 142, or the entire connecting member may be located in the sliding slot 141.

Referring to FIGs. 2 and 3, in some embodiments, the fixing base 14 includes two opposite support arms 143. The sliding slot 141 is formed between the two support arms 143, and the connecting member 152 is rotatably mounted on the two support arms 143 via a rotation shaft 144.

The two support arms 143 may be disposed opposite to each other along a thickness direction of the electrophoresis component 11. The two support arms 143 may be integrally formed, or may be fixedly connected by means of welding, bonding, or the like.

The width of the sliding slot 141 may be adapted to the thickness of the electrophoresis component 11. An insertion hole 153 is formed in the connecting member 152, and a rotation shaft 144 is provided on the support arm 143; the rotation shaft 144 is inserted into the insertion hole 153, and the connecting member 152 rotates relative to the rotation shaft 144.

When the connecting member 152 drives the latching member 151 to rotate away from the accommodating space 142, the electrophoresis component 11 can be inserted into the accommodating space 142, or the electrophoresis component 11 can be withdrawn from the accommodating space 142; when the connecting member 152 drives the latching member 151 to rotate toward the accommodating space 142, the latching member 151 can abut against the electrophoresis component 11 to lock the electrophoresis component 11. Referring to FIGs. 2 and 3, in some embodiments, the latching member 151 protrudes from the connecting member 152 toward the accommodating space 142, and/or the latching member 151 protrudes from a top end of the fixing base 14.

It may be that the latching member 151 protrudes from the connecting member 152 toward the accommodating space 142, so as to limit the position of the chip 200 in a height direction of the fixing base 14. It may also be that the latching member 151 protrudes from the top end of the fixing base 14, so as to help drive the rotation of the latching member 151. It may further be that the latching member 151 protrudes from the connecting member 152 toward the accommodating space 142 and protrudes from the top end of the fixing base 14.

Referring to FIG. 2, in some embodiments, the fixing base 14 includes two opposite mounting bases 145. Both of the two mounting bases 145 are provided with the sliding slot 141, and the latching assembly 15 is provided on at least one of the mounting bases 145.

The two mounting bases 145 may be disposed opposite to each other along a length direction of the electrophoresis component 11, and the accommodating space 142 is formed between the two mounting bases 145. It may be that the latching assembly 15 is provided on one of the mounting bases 145, or it may be that both of the two mounting bases 145 are provided with the latching assembly 15. The structures of the two mounting bases 145 may be the same or different.

The fixing base 14 may be composed of two mounting bases 145, and each mounting base 145 may be composed of two support arms 143.

Referring to FIG. 2, in some embodiments, the electrophoresis component 11 includes a fixing plate 16. Probes 13 are disposed on the fixing plate 16 in a protruding manner, and the fixing plate 16 is latched in the sliding slot 141.

The fixing plate 16 can provide support for the probes 13. A plurality of electrophoresis channels may be provided in the chip 200, and each electrophoresis channel can accommodate one sample; for example, 16 electrophoresis channels are provided, correspondingly accommodating 16 samples. The fixing plate 16 is provided with one probe 13 above and one probe 13 below each electrophoresis channel, for example, a total of 32 probes 13. These probes 13 can simultaneously perform electrophoretic separation on the samples in the electrophoresis channels.

Referring to FIG. 2, in some embodiments, the electrophoresis component 11 includes a circuit board 17. The circuit board 17 is disposed on the fixing plate 16 and located on a side, facing away from the probes 13, of the fixing plate 16. The circuit board 17 is electrically connected to the probes 13.

The circuit board 17 is configured to connect to an external power source to energize the probes 13. Since the electrophoresis component 11 requires a relatively large number of probes 13, the circuit board 17 can be disposed in close contact with the fixing plate 16, so that the circuit board 17 can contact the probes 13, thereby reducing wiring to sufficiently save space.

The circuit board 17 is located on the side, facing away from the probes 13, of the fixing plate 16, which can prevent the chip 200 from contacting the circuit board 17 and causing damage to the circuit board 17. Referring to FIG. 3, in some embodiments, a clearance surface 154 is formed on a side, away from the latching member 151, of the connecting member 152. A clearance space 155 is formed between the clearance surface 154 and a side wall, close to the latching assembly 15, of the electrophoresis component 11, and the clearance space 155 is configured to provide clearance for the connecting member 152 to rotate. A first surface and a second surface perpendicular to the first surface are formed on the connecting member 152. The clearance surface 154 connects the first surface and the second surface, and is disposed inclined relative to the first surface and the second surface. When the latching member 151 abuts against the electrophoresis component 11, the first surface fits against a side surface of the electrophoresis component 11 in the length direction.

A plane formed by a connecting line between the first surface and the clearance surface 154 and a central axis of the insertion hole 153 is parallel to the second surface, so that when the connecting member 152 rotates about the central axis of the insertion hole 153, no interference is caused to the electrophoresis component 11.

Referring to FIG. 2, in some embodiments, the mounting component 12 includes a first elastic member 18. The first elastic member 18 is connected to the latching assembly 15 and is configured to exert an elastic force on the latching assembly 15, so that the latching assembly 15 remains in a position latched with the electrophoresis component 11 after an external force is removed.

The first elastic member 18 may be a spring. When the latching assembly 15 rotates away from the accommodating space 142 under the action of an external force, the first elastic member 18 is in a compressed state. After the electrophoresis component 11 is inserted into the accommodating space 142 and the external force is removed, the latching assembly 15 resets to abut against the electrophoresis component 11 under the action of the elastic force. At this point, the first elastic member 18 is still in a compressed state, providing an elastic force toward the electrophoresis component 11 to lock the electrophoresis component 11.

Referring to FIG. 2, in some embodiments, the mounting component 12 includes a limiting member 19 disposed on the fixing base 14, and an end, away from the latching assembly 15, of the first elastic member 18 abuts against the limiting member 19.

The limiting member 19 may be located on a side, facing away from the accommodating space 142, of the mounting base 145. The limiting member 19 and the mounting base 145 may be integrally formed, or the limiting member may be fixedly connected to the mounting base 145 by means of fasteners such as bolts. Additionally, the two ends of the first elastic member 18 respectively abut against the latching assembly 15 and the limiting member 19, so that the elastic force generated by the first elastic member 18 can be entirely used to drive the movement of the latching assembly 15.

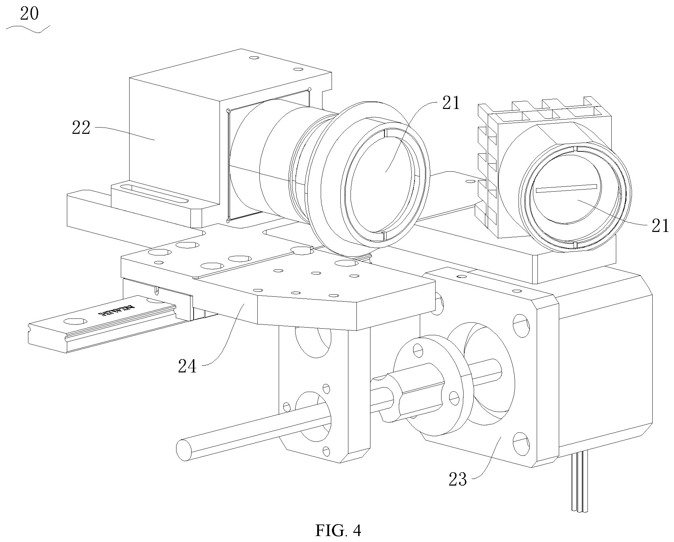

Referring to FIGs. 1 and 4, in some embodiments, the imaging mechanism 20 includes a light source 21 and a camera 22. The light source 21 is configured to emit light toward the chip 200, and the camera 22 is configured to photograph and image the sample in the chip 200.

The number of light sources 21 may be two, and the two light sources 21 may emit light of different wavelengths. In some embodiments, one light source 21 emits light of a first wavelength to excite a first optically detectable marker on a nucleic acid sample to generate a first optical signal, and the camera 22 photographs the nucleic acid sample to collect the first optical signal for imaging; the other light source 21 emits light of a second wavelength to excite a second optically detectable marker on a molecular weight standard to generate a second optical signal, and the camera 22 photographs the molecular weight standard to collect the second optical signal for imaging. The first optically detectable marker may be the same as or different from the second optically detectable marker. In some embodiments, one light source 21 emits light of a first wavelength to excite optically detectable markers on the nucleic acid sample and the molecular weight standard to generate optical signals, and the camera 22 photographs the nucleic acid sample to collect the optical signals for imaging; the other light source 21 emits light of a second wavelength to illuminate a QR code on the chip 200, and the camera 22 photographs the QR code. The QR code is similar to an "ID card" of the chip 200, and the two have a corresponding relationship, so that specific information of the chip 200 can be obtained according to the QR code.

In one embodiment, the sample analysis device 100 includes a protective cover. The protective cover is disposed over an outer side of the imaging mechanism 20 to protect the imaging mechanism 20. Referring to FIG. 4, in some embodiments, the imaging mechanism 20 includes a first drive assembly 23, and the first drive assembly 23 drives the light source 21 and the camera 22 to move relative to the chip 200.

The first drive assembly 23 may be a motor or a motor assembly. The imaging mechanism 20 further includes a carrier plate 24, and an output shaft of the motor is connected to the carrier plate 24. The light source 21 and the camera 22 are fixed on the carrier plate 24. The motor, when operating, drives the carrier plate 24 to move via the output shaft, thereby driving the light source 21 and the camera 22 to move relative to the chip 200.

Since an imaging range of the camera 22 and an emission range of the light source 21 are limited, driving the light source 21 and the camera 22 to move relative to the chip 200 by the first drive assembly 23 enables photographing and imaging of the samples in respective electrophoresis channels of the chip 200. Referring to FIG. 1, in some embodiments, the sample analysis device 100 includes a motion mechanism 30. The motion mechanism 30 is configured to drive the chip 200 to move, so as to push the chip 200 to a sample loading station or an analysis station.

The motion mechanism 30 may first push the chip 200 to the sample loading station for sample loading; after sample loading of the chip 200 is completed, the motion mechanism 30 then pushes the chip 200 to the analysis station for electrophoresis.

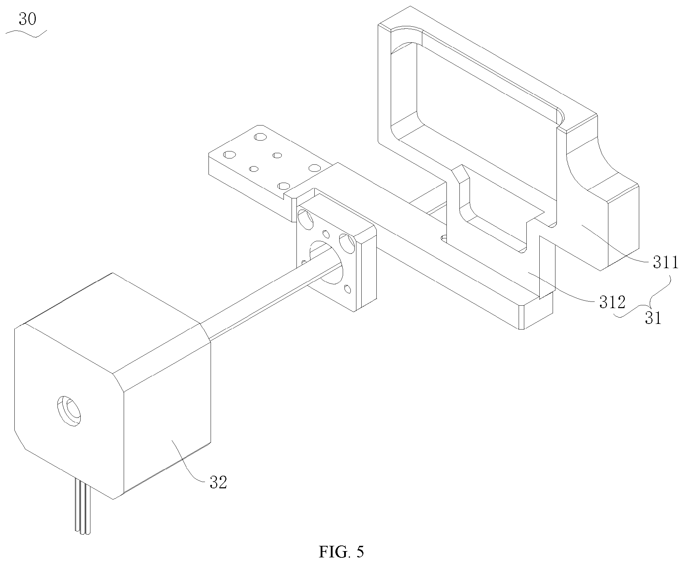

Referring to FIG. 5, in some embodiments, the motion mechanism 30 includes a pressing plate 31 and a second drive assembly 32 connected to the pressing plate 31. The second drive assembly 32 drives the pressing plate 31 to move, so as to push the chip 200 toward the electrophoresis mechanism 10 to move to the sample loading station or the analysis station.

The pressing plate 31 may be in contact with the chip 200. The second drive assembly 32 may be a motor or a motor assembly. An output shaft of the motor is connected to the pressing plate 31. The motor, when operating, drives the pressing plate 31 to move via the output shaft, thereby pushing the chip 200 to move.

Referring to FIGs. 1, 2, and 5, in some embodiments, the motion mechanism 30 includes a movable plate 33 and a second elastic member 34. The movable plate 33 is disposed between the electrophoresis mechanism 10 and the pressing plate 31, and the second elastic member 34 connects the electrophoresis mechanism 10 and the movable plate 33. The second elastic member 34 drives the movable plate 33 to move, so as to push the chip 200 located at the analysis station toward the pressing plate 31 to move to the sample loading station.

The chip 200 may be arranged vertically. Under the pushing of the motion mechanism 30, the chip 200 is placed in close contact with the movable plate 33. One chip 200 may be provided; one side of the chip 200 receives a pushing force provided by the motion mechanism 30, and the other side of the chip receives an acting force from the movable plate 33, so that the chip 200 is located at the analysis station. A plurality of chips 200 may be provided, and the chips 200 are arranged to fit against one another. One of the chips 200 in contact with the motion mechanism 30 receives the pushing force provided by the motion mechanism 30; another chip 200 in contact with the movable plate 33, under the pushing of the motion mechanism 30, is placed in close contact with the movable plate 33, and the chip 200 in close contact with the movable plate 33 is located at the analysis station.

When the chip 200 is initially located at the analysis station, the chip 200 may be in a slightly tilted state. The motion mechanism 30 provides a pushing force to the chip 200; the chip 200, receiving the pushing force on one side and the acting force of the movable plate 33 on the other side, rotates slightly to become in a vertical state, and is placed in close contact with the movable plate 33.

The second elastic member 34 may be a spring. When the second drive assembly 32 pushes the pressing plate 31 to move toward the fixing plate 16, the chip 200 moves toward the fixing plate 16. After the chip 200 moves to fit against the movable plate 33, the second drive assembly 32 continues to push the pressing plate 31 to move toward the fixing plate 16 until the chip 200 is located at the analysis station. At this point, the spring is in a compressed state and provides, toward two sides, acting forces to the fixing plate 16 and the movable plate 33, respectively. When the second drive assembly 32 drives the pressing plate 31 to move away from the fixing plate 16, the elastic force of the spring drives the movable plate 33 to move away from the fixing member, thereby driving the chip 200 to move, until the spring restores to an original state. Sample loading and electrophoresis of the chip 200 may be performed at different positions, or sample loading and electrophoresis may be performed at the same position. This can simplify the structure of the motion mechanism 30 and reduce the occupied space of the sample analysis device 100.

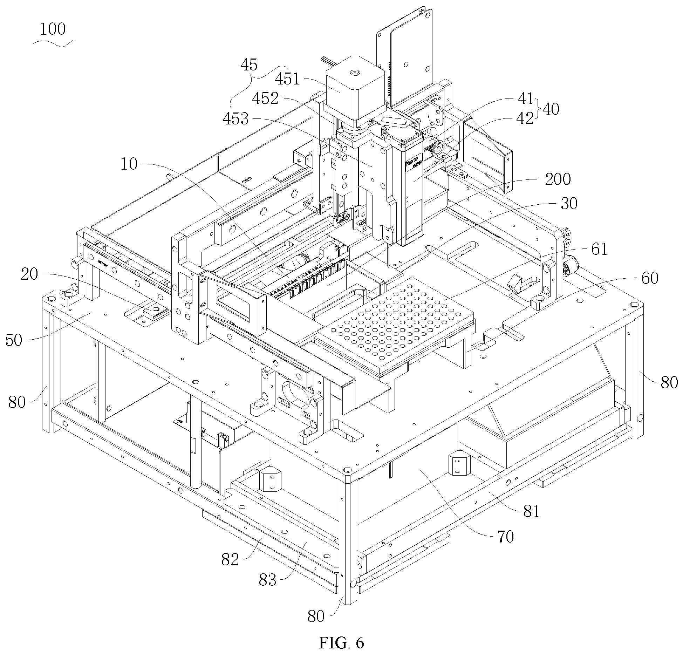

Referring to FIG. 6, in some embodiments, the sample analysis device 100 includes a sample loading mechanism 40 and a base plate 50. The electrophoresis mechanism 10, the sample loading mechanism 40, and the imaging mechanism 20 are all disposed on the base plate 50. The sample loading mechanism 40 includes a power component 41 and a sample loader 42 connected to the power component 41. The power component 41 drives the sample loader 42 to move toward the sample, or drives the sample loader 42 to move toward the chip 200.

The first drive assembly 23 and the second drive assembly 32 may be disposed below the base plate 50 to save space.

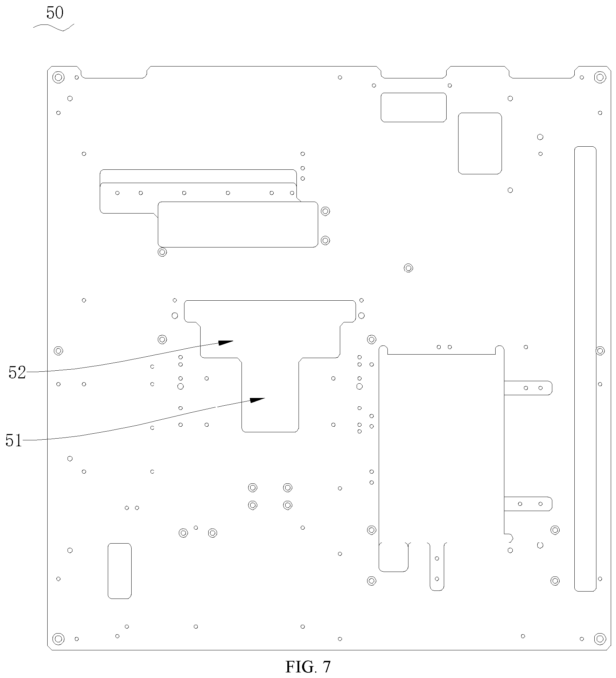

Referring to FIGs. 1, 5, and 7 in conjunction, a cavity 51 may be provided in the base plate 50. The cavity 51 penetrates the base plate 50 along a thickness direction of the base plate 50, and the cavity 51 provides a movement space for the pressing plate 31. The pressing plate 31 includes a pushing plate 311 and a connecting plate 312. The pushing plate 311 is in contact with the chip 200. The connecting plate 312 connects the pushing plate 311 and the second drive assembly 32. The length of the connecting plate 312 is adapted to the length of the cavity 51, so that the connecting plate 312 can move within the cavity 51. The length of the pushing plate 311 is adapted to the length of the chip 200, so that the pushing plate 311 can provide a uniform acting force to the chip 200. The pushing plate 311 and the connecting plate 312 may be integrally formed, or may be fixedly connected by means of welding, bonding, or the like.

The sample loader 42 includes a puncture needle and a sample loading needle. First, the puncture needle punctures a sample loading position of the chip 200, and then the sample loading needle loads a sample into the electrophoresis channel.

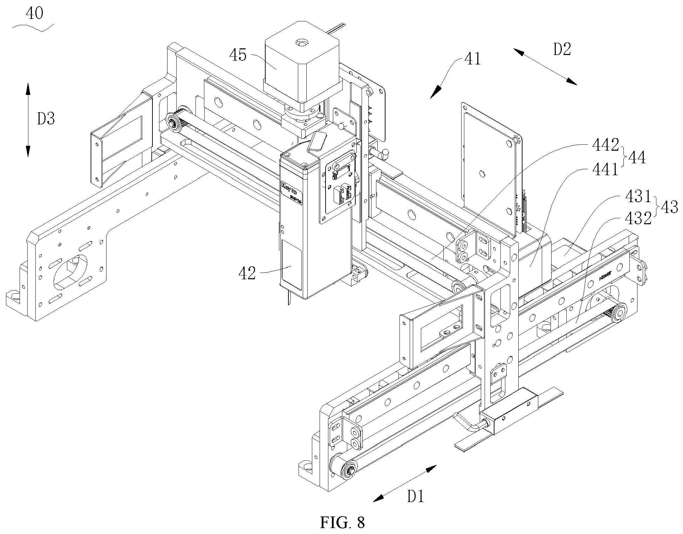

Referring to FIGs. 6 and 8, in some embodiments, the power component 41 includes a first power assembly 43, a second power assembly 44 disposed on the first power assembly 43, and a third power assembly 45 disposed on the second power assembly 44. The sample loader 42 is disposed on the third power assembly 45. The first power assembly 43 drives the sample loader 42 to move along a first direction D1, the second power assembly 44 drives the sample loader 42 to move along a second direction D2, and the third power assembly 45 drives the sample loader 42 to move along a third direction D3. The first direction D1, the second direction D2, and the third direction D3 are perpendicular to each other.

The first power assembly 43 includes a first driving member 431 and a first conveyor belt 432. The second power assembly 44 is fixed on the first conveyor belt 432. The first conveyor belt 432 extends along the first direction D1. The first driving member 431 drives the first conveyor belt 432 to move along the first direction D1, thereby driving the second power assembly 44 to move along the first direction D1.

The second power assembly 44 includes a second driving member 441 and a second conveyor belt 442. The third power assembly 45 is fixed on the second conveyor belt 442. The second conveyor belt 442 extends along the second direction D2. The second driving member 441 drives the second conveyor belt 442 to move along the second direction D2, thereby driving the third power assembly 45 to move along the second direction D2.

The third power assembly 45 includes a third driving member 451, a slide rail 452, and an L-shaped plate. The slide rail 452 extends along the third direction D3. One side of the L-shaped plate is slidably disposed on the slide rail 452, and the sample loader 42 is fixed on the other side of the L-shaped plate. The third driving member 451 drives the L-shaped plate to slide on the slide rail 452 along the third direction D3, thereby driving the sample loader 42 to move along the third direction D3.

The first direction D1 and the second direction D2 may be a length direction and a width direction of the sample analysis device 100, respectively, and the third direction D3 may be a height direction of the sample analysis device 100.

The first driving member 431, the second driving member 441, and the third driving member 451 may be motors. By means of the power component 41, the requirement for multi-dimensional movement of the sample loader 42 can be satisfied, ensuring that the sample can be transferred into the chip 200.

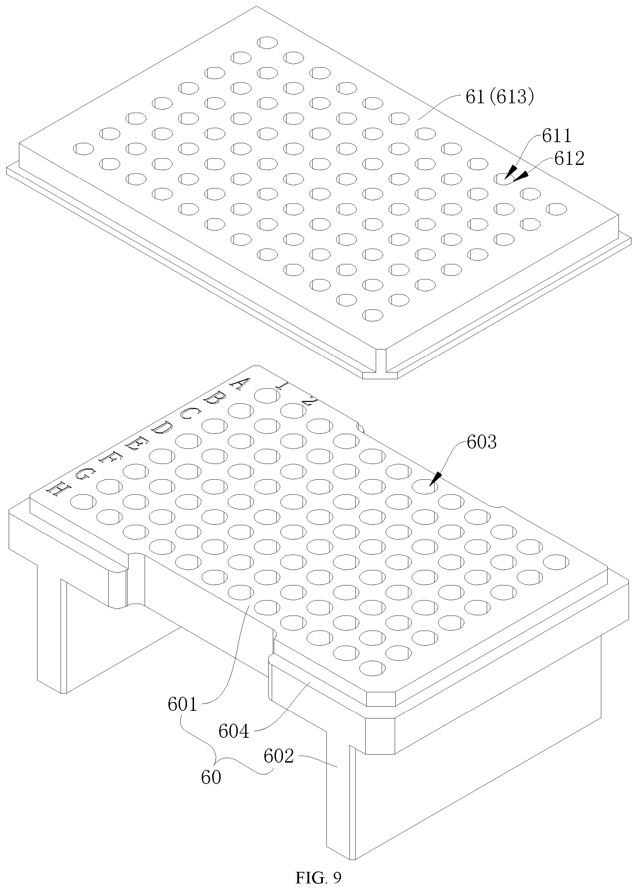

Referring to FIGs. 6 and 9, in some embodiments, the sample analysis device 100 includes a bracket 60 and a sample rack 61. The bracket 60 is fixed on the base plate 50, and the sample rack 61 is detachably disposed on the bracket 60. The sample rack 61 is provided with sample wells 611 for accommodating the sample. A mouth 612 is formed on each sample well 611, and the sample loading mechanism 40 is inserted into the sample well 611 through the mouth 612.

A user can directly place a sample into the sample well 611. After the sample analysis is finally completed, the sample rack 61 is removed to clean the sample rack 61. The sample rack 61 is detachably disposed on the bracket 60, which facilitates the cleaning of the sample rack 61 and reduces contamination caused by mixing of different samples.

Referring to FIGs. 9 to 11, in some embodiments, the bracket 60 includes a panel 601 and two support members 602 disposed opposite to each other. The panel 601 is disposed on the two support members 602. Holes 603 are provided penetrating through the panel 601 along a thickness direction, and the sample wells 611 are inserted in the holes 603.

The panel 601 is disposed perpendicularly to the two support members 602. The holes 603 may be disposed between the two support members 602, or may be disposed on the support members 602.

The support members 602 can provide support for the panel 601 and simultaneously raise the height of the panel 601. In one embodiment, the height of the mouth 612 of the sample well 611 is the same as the height of the sample loading position of the chip 200, which can shorten the movement stroke of the sample loader 42 for performing sampling and sample loading between the sample well 611 and the chip 200.

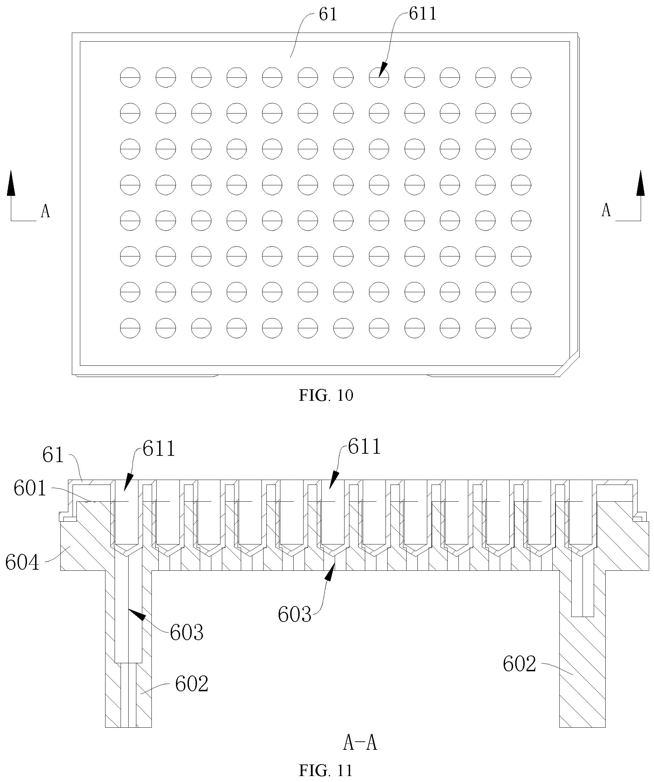

Referring to FIGs. 9 and 11, in some embodiments, a surface, facing the support member 602, of the panel 601 extends outward to form a flange 604. The sample rack 61 abuts against a surface, away from the support member 602, of the flange 604, or the sample rack 61 abuts against a surface, away from the support member 602, of the panel 601. In this way, the bracket 60 can be adapted to various sample racks 61, reducing the number of brackets 60 and saving space in the sample analysis device 100.

In some embodiments, the sample rack 61 includes a first sample rack and a second sample rack. Sample wells 611 of the first sample rack are inserted in a portion of the holes 603, and sample wells 611 of the second sample rack are inserted in all of the holes 603. The height of the mouth 612 of the first sample rack is the same as the height of the mouth 612 of the second sample rack.

The first sample rack may be an 8-tube strip; that is, the first sample rack is provided with eight sample wells 611, and abuts against the surface, away from the support member 602, of the panel 601. The second sample rack may be a semi-skirted 96-well plate 613; that is, the second sample rack is provided with 96 sample wells 611, and abuts against the surface, away from the support member 602, of the flange 604 by means of an outer tube wall. The panel 601 is provided with 96 holes 603, that is, 8×12 holes 603. The eight sample wells 611 of the first sample rack are inserted in eight of the holes 603, and the 96 sample wells 611 of the second sample rack are in one-to-one correspondence with the 96 holes 603.

The height of the mouth 612 of the first sample rack is the same as the height of the mouth 612 of the second sample rack, so that the sample loader 42 rises to the same height after sampling from the first sample rack and after sampling from the second sample rack. Exemplarily, if the height of the mouth 612 of the first sample rack and the height of the mouth 612 of the second sample rack are greater than or equal to the height of the sample loading position of the chip 200, the sample loader 42 only needs to rise to be higher than the mouth 612 of the first sample rack or the mouth 612 of the second sample rack after sampling from the first sample rack and after sampling from the second sample rack; if the height of the mouth 612 of the first sample rack and the height of the mouth 612 of the second sample rack are less than the height of the sample loading position of the chip 200, the sample loader 42 only needs to rise to be higher than the sample loading position of the chip 200 after sampling from the first sample rack and after sampling from the second sample rack.

Since the sample loader 42 extends into a tube bottom of the sample well 611 through the mouth 612 of the sample well 611 for sampling, when the sample wells 611 of the first sample rack and the sample wells 611 of the second sample rack are respectively inserted in the holes 603 formed in the panel 601, and the height of the tube bottom of the first sample rack is the same as the height of the tube bottom of the second sample rack, it can be ensured that heights of liquid levels are consistent when the first sample rack and the second sample rack hold the same liquid, making the descending height of the sample loader 42 consistent and improving sampling convenience. When the sample wells 611 of the first sample rack and the sample wells 611 of the second sample rack are respectively inserted in the holes 603 formed in the panel 601, and the height of the tube bottom of the first sample rack is different from the height of the tube bottom of the second sample rack, the descending height of the sample loader 42 can be obtained by a user selecting a type of the sample rack 61 or using a sensor to identify the type of the sample rack 61.

Referring to FIGs. 6, 7, and 12, in some embodiments, the sample analysis device 100 includes a waste chip bin 70. The waste chip bin 70 is disposed on a side, facing away from the sample loading mechanism 40, of the base plate 50. A via hole 52 is formed in the base plate 50 along a thickness direction, and the chip 200 drops into the waste chip bin 70 through the via hole 52.

The waste chip bin 70 can collect the chip 200 that has completed sample analysis. The via hole 52 may be disposed at a position corresponding to the analysis station, and the length of the via hole 52 is adapted to the length of the chip 200, so that the chip 200 can pass through the via hole 52 and drop into the waste chip bin 70.

In some embodiments, the sample analysis device 100 includes a bent plate 71. The bent plate 71 includes a first plate 72 and a second plate 73. A certain bending angle is formed between the first plate 72 and the second plate 73, such as 50°, 60°, 70°, or other angles. The first plate 72 is close to the via hole 52 and corresponds to a position where the analysis station is located. The second plate 73 is close to the waste chip bin 70 and corresponds to an opening of the waste chip bin 70. After the sample in the chip 200 completes analysis, the chip 200 drops from the via hole 52 onto the first plate 72, and then drops into the waste chip bin 70 along the first plate 72 and the second plate 73.

The bent plate 71 can provide a certain guiding effect to prevent the chip 200 from failing to drop smoothly into the waste chip bin 70. In addition, the bent plate 71 can provide a certain buffering effect, avoiding damage to the chip 200 and leakage of the sample in the chip 200 when the chip 200 drops from top to bottom into the waste chip bin 70.

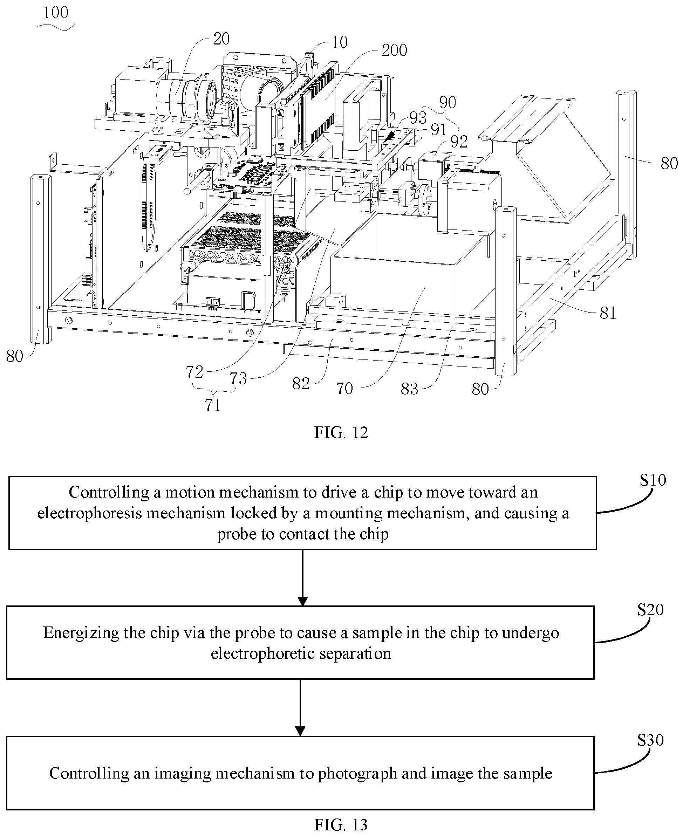

Referring to FIGs. 6 and 12, in some embodiments, the sample analysis device 100 includes support legs 80 and a tray 81. The support legs 80 are disposed perpendicular to the base plate 50, and two adjacent support legs 80 are connected by a connecting rod 82. The tray 81 is slidably connected to the connecting rod 82, and the waste chip bin 70 is fixed in the tray 81.

The support legs 80 can provide support for the base plate 50. Exemplarily, the base plate 50 is of a square structure, the number of connecting rods 82 is two, and the two connecting rods 82 are arranged in parallel. The number of support legs 80 is four. The four support legs 80 are respectively disposed at two ends of the two connecting rods 82 and correspond to four corners of the base plate 50, so that the support legs 80 provide a better support effect for the base plate 50. The tray 81 is disposed between the two connecting rods 82 and slides along a length direction of the connecting rods 82 to drive the waste chip bin 70 to slide, facilitating a user's cleaning of the chips 200 in the waste chip bin 70.

Referring to FIGs. 6 and 12, in some embodiments, a first side seat 83 is disposed on the connecting rod 82. A first guide groove is provided on a side, facing the tray 81, of the first side seat 83, and a first rib is provided on a side, facing the first side seat 83, of the tray 81. The first rib is latched in the first guide groove, and the first rib slides along a length direction of the first guide groove.

The first side seat 83 can be fixed to the connecting rod 82 by means of fasteners such as bolts, and the length direction of the first guide groove is consistent with the length direction of the connecting rod 82. The first guide groove may be a T-shaped groove, and one end of the first rib may be a T-shaped structure. The T-shaped structure slides within the T-shaped groove, which can prevent the first rib from sliding in width and depth directions of the first guide groove, thereby preventing the tray 81 from disengaging from the first side seat 83.

The first rib and the tray 81 may be integrally formed, or may be fixedly connected by means of welding, bonding, or the like.

In some embodiments, a first stopping part is disposed at an end part of the first guide groove. The first stopping part is configured to limit the movement stroke of the first rib in the first guide groove.

The first stopping part is disposed at both of two end parts of the first guide groove along the length direction. When the first rib slides to the end part of the first guide groove, the T-shaped structure of the first rib abuts against the first stopping part, preventing the first rib from continuing to slide outward and causing the tray 81 to disengage from the first side seat 83.

The first stopping part may be integrally formed with the first side seat 83. The first guide groove may be formed by extending inwardly from a surface on the side, facing the tray 81, of the first side seat 83. The length of the first guide groove is less than the length of the first side seat 83; that is, the first guide groove is located between two ends of the first side seat 83 in the length direction.

In some embodiments, the sample analysis device 100 includes a guide rail. A second side seat is disposed on the connecting rod 82. A second guide groove is provided on a side, facing the tray 81, of the second side seat, and a second rib is provided on a side, facing the second side seat, of the tray 81. The guide rail is latched in the second guide groove, and the guide rail slides along a length direction of the second guide groove. The second rib is latched in the guide rail, and the second rib slides along a length direction of the guide rail.

The second side seat may be fixed to the connecting rod 82 by means of fasteners such as bolts, and the length direction of the second guide groove is consistent with the length direction of the connecting rod 82. The second guide groove may be a T-shaped groove, and an end of the guide rail on a side facing the second side seat may be a T-shaped structure. The T-shaped structure slides within the T-shaped groove, which can prevent the guide rail from sliding in width and depth directions of the second guide groove, thereby preventing the guide rail from disengaging from the second side seat. Similarly, a T-shaped groove can be formed on a side, close to the tray 81, of the guide rail, and one end of the second rib may be a T-shaped structure. The T-shaped structure slides within the T-shaped groove, which can prevent the second rib from sliding in width and height directions of the guide rail, thereby preventing the tray 81 from disengaging from the guide rail.

The second rib and the tray 81 may be integrally formed, or may be fixedly connected by means of welding, bonding, or the like.

The second rib is capable of sliding relative to the guide rail along the length direction of the guide rail, and the guide rail is capable of sliding in the second guide groove along the length direction of the second guide groove, so that the movement stroke of the tray 81 is the sum of the length of the second guide groove and the length of the guide rail. This can increase the movement stroke of the tray 81, facilitate the operation of the waste chip bin 70, and make the sliding of the tray 81 smoother.

In some embodiments, a second stopping part is disposed at an end part of the second guide groove. The second stopping part is configured to limit the movement stroke of the guide rail in the second guide groove. The second stopping part is disposed at both of two end parts of the second guide groove along the length direction. When the guide rail slides to the end part of the second guide groove, the T-shaped structure of the guide rail abuts against the second stopping part, preventing the guide rail from continuing to slide outward and causing the guide rail to disengage from the second side seat.

The second stopping part may be integrally formed with the second side seat. The second guide groove may be formed by extending inwardly from a surface on the side, facing the tray 81, of the second side seat. The length of the second guide groove is less than the length of the second side seat; that is, the second guide groove is located between two ends of the second side seat in the length direction.

In some embodiments, a third stopping part is disposed at an end part of the guide rail. The third stopping part is configured to limit the movement stroke of the second rib in the guide rail.

The third stopping part is disposed at both of two end parts of the T-shaped groove formed from the guide rail along the length direction. When the second rib slides to the end part of the T-shaped groove, the T-shaped structure of the second rib abuts against the third stopping part, preventing the second rib from continuing to slide outward and causing the tray 81 to disengage from the guide rail.

The third stopping part may be integrally formed with the guide rail. The T-shaped groove may be formed by extending inwardly from a surface on a side, facing the tray 81, of the guide rail. The length of the T-shaped groove is less than the length of the guide rail; that is, the T-shaped groove is located between two ends of the guide rail in the length direction.

In some embodiments, a gripping part is disposed on the tray 81, and the tray 81 is driven to move via the gripping part.

The gripping part may be a handle or a groove. The handle may be disposed on the exterior of the tray 81 to facilitate gripping by a user. The groove may be formed by extending inwardly from a surface of the tray 81, so that the space occupied by the tray 81 can be reduced.

Referring to FIG. 12, in some embodiments, the sample analysis device 100 includes a blocking mechanism 90. The blocking mechanism 90 includes a blocking plate 91 and a third drive assembly 92. The blocking plate 91 is connected to the third drive assembly 92, and a through hole 93 is formed in the blocking plate 91. The third drive assembly 92 drives the blocking plate 91 to move toward or away from the electrophoresis component 11, so as to cause the chip 200 to drop from the through hole 93 into the waste chip bin 70 or to block the chip 200 from dropping into the waste chip bin 70.

The third drive assembly 92 may be a motor or a motor assembly. A protrusion is provided downwardly on the blocking plate 91, and an output shaft of the motor is connected to the protrusion. The motor, when operating, drives the protrusion to move via the output shaft, thereby driving the blocking plate 91 to move.

The blocking plate 91 may be located in the via hole 52. The blocking plate 91 features a 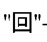 -shaped structure, and the through hole 93 is formed in the middle. The length of the through hole 93 may be adapted to the length of the chip 200. When the blocking plate 91 is in an initial position, a side edge of the blocking plate 91 corresponds to a bottom of the chip 200 to block the chip 200 from dropping. After the motor drives the blocking plate 91 to move toward the electrophoresis component 11 via the output shaft, the blocking effect of the blocking plate 91 is removed, and the chip 200 drops into the waste chip bin 70 through the through hole 93.

In some embodiments, the blocking mechanism 90 includes a third elastic member. One end of the third elastic member is connected to the base plate 50, and the other end of the third elastic member is connected to the blocking plate 91. The third elastic member drives the blocking plate 91 to reset.

The third elastic member may be a spring. After the chip 200 drops into the waste chip bin 70, the motor operates to drive the blocking plate 91 to move away from the electrophoresis component 11 via the output shaft, resetting to the initial position.

Due to a driving precision issue of the third drive assembly 92, the blocking plate 91 may not reset to an accurate initial position. If a next chip 200 is transferred to the analysis station, since a bottom end of the chip 200 is relatively thin, there exists a problem that the chip 200 drops into a gap, ultimately resulting in the inability to analyze the next chip 200. Therefore, by means of an acting force provided by the third elastic member to the blocking plate 91, it can be ensured that the blocking plate 91 resets to the accurate initial position, so that the blocking plate 91 can successfully block the next chip 200 from dropping.

Referring to FIG. 13, the control method according to the embodiments of the present application is applicable to the sample analysis device 100. The control method includes the following steps.

In S10, the motion mechanism 30 is controlled to drive the chip 200 to move toward the electrophoresis component 11 locked by the mounting component 12, and the probe 13 is caused to contact the chip 200. In S20, the chip 200 is energized via the probe 13 to cause the sample in the chip 200 to undergo electrophoretic separation.

In S30, the imaging mechanism 20 is controlled to photograph and image the sample.

In step S10, the chip 200 may first be brought into contact with the pressing plate 31, and then the second drive assembly 32 is controlled to drive the pressing plate 31 to move toward the electrophoresis mechanism 10, so as to drive the chip 200 to move toward the electrophoresis mechanism 10, until the chip 200 abuts against the movable plate 33. The second drive assembly 32 is controlled to drive the pressing plate 31 to continue moving toward the electrophoresis mechanism 10 until the chip 200 contacts the probe 13. At this point, the second elastic member 34 is in a compressed state and provides an acting force to the pressing plate 31 to move away from the electrophoresis mechanism 10.

Before driving the chip 200 to move, an external force may first be utilized to drive the latching assembly 15 of the mounting component 12 to rotate away from the accommodating space 142. Then, the electrophoresis component 11 is inserted into the accommodating space 142. Subsequently, the external force is removed to cause the latching assembly 15 to reset to abut against the electrophoresis component 11, so as to lock the electrophoresis component 11 on the fixing base 14 of the mounting component 12. In step S20, energization and de-energization of the probe 13 may be controlled by controlling the state of the circuit board 17. Specifically, first, the probe 13 is controlled via the circuit board 17 to energize the chip 200, so as to cause the sample in the chip 200 to undergo electrophoretic separation. After the sample in the chip 200 completes the electrophoretic separation, the probe 13 is then controlled via the circuit board 17 to be de-energized.

In step S30, the light source 21 may first be utilized to emit light toward a portion of the electrophoresis channels of the chip 200, and simultaneously, the camera 22 is utilized to photograph and image the portion of the electrophoresis channels of the chip 200. Then, the first drive assembly 23 is controlled to drive the light source 21 and the camera 22 to move relative to the chip 200, so as to emit light toward, as well as photograph and image, the remaining portions of the electrophoresis channels of the chip 200.

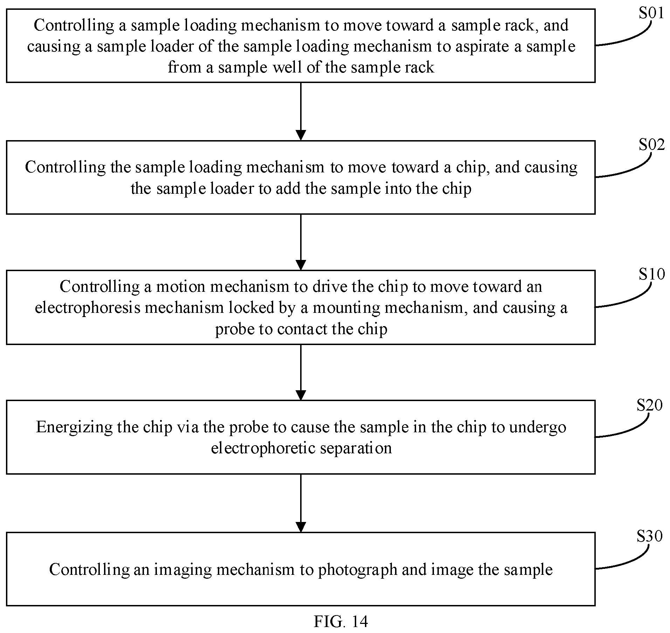

Referring to FIG. 14, in some embodiments, before controlling the motion mechanism 30 to drive the chip 200 to move toward the electrophoresis component 11 locked by the mounting component 12, the method includes the following steps.

In S01, the sample loading mechanism 40 is controlled to move toward the sample rack 61, and the sample loader 42 of the sample loading mechanism 40 is caused to aspirate a sample from a sample well 611 of the sample rack 61.

In S02, the sample loading mechanism 40 is controlled to move toward the chip 200, and the sample loader 42 is caused to add the sample into the chip 200.

In step S01, the first power assembly 43 may first be controlled to drive the sample loader 42 to move along the first direction D1, and then the second power assembly 44 is controlled to drive the sample loader 42 to move along the second direction D2; or, the second power assembly 44 may first be controlled to drive the sample loader 42 to move along the second direction D2, and then the first power assembly 43 is controlled to drive the sample loader 42 to move along the first direction D1, so that the sample loading needle of the sample loader 42 is located right above the sample well 611 of the sample rack 61. Finally, the third power assembly 45 is controlled to drive the sample loader 42 to move along the third direction D3, so as to cause the sample loading needle of the sample loader 42 to insert into the sample well 611 of the sample rack 61.

In step S02, the first power assembly 43 may first be controlled to drive the sample loader 42 to move along the first direction D1, and then the second power assembly 44 is controlled to drive the sample loader 42 to move along the second direction D2; or, the second power assembly 44 may first be controlled to drive the sample loader 42 to move along the second direction D2, and then the first power assembly 43 is controlled to drive the sample loader 42 to move along the first direction D1, so that the sample loading needle of the sample loader 42 is located right above an electrophoresis channel of the chip 200. Finally, the third power assembly 45 is controlled to drive the sample loader 42 to move along the third direction D3, so as to cause the sample loading needle of the sample loader 42 to insert into the electrophoresis channel of the chip 200.

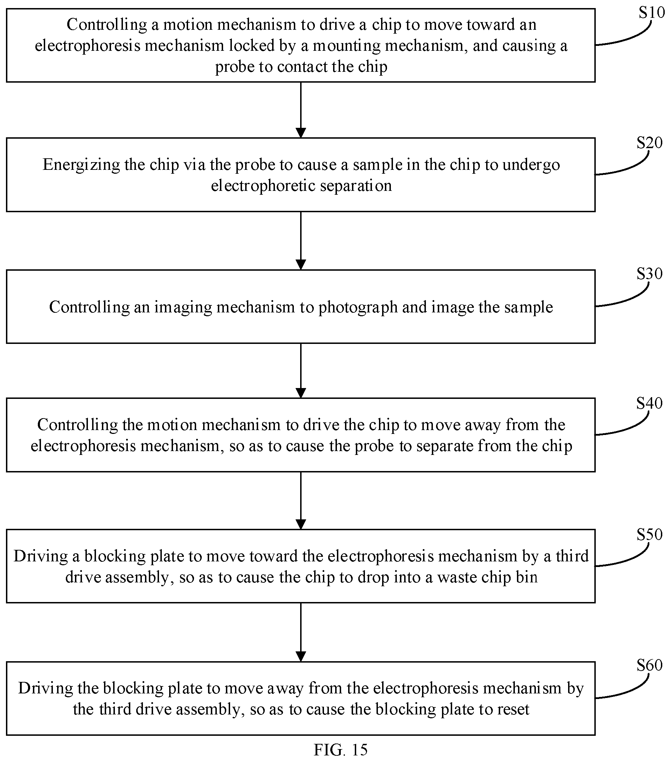

Referring to FIG. 15, in some embodiments, after controlling the imaging mechanism 20 to photograph and image the sample, the method includes the following steps.

In S40, the motion mechanism 30 is controlled to drive the chip 200 to move away from the electrophoresis component 11, so as to cause the probe 13 to separate from the chip 200.

In S50, the blocking plate 91 is driven by the third drive assembly 92 to move toward the electrophoresis component 11, so as to cause the chip 200 to drop into the waste chip bin 70.

In S60, the blocking plate 91 is driven by the third drive assembly 92 to move away from the electrophoresis component 11, so as to cause the blocking plate 91 to reset.

In step S40, the second drive assembly 32 may first be controlled to drive the pressing plate 31 to move away from the electrophoresis component 11. The movable plate 33 moves away from the electrophoresis component 11 under an acting force of the second elastic member 34, so as to drive the chip 200 to move away from the electrophoresis component 11. When the second elastic member 34 restores to an original state, the probe 13 separates from the chip 200.

In step S50, the third drive assembly 92 is controlled to drive the blocking plate 91 to move toward the electrophoresis component 11, until a side edge of the blocking plate 91 is staggered from a bottom of the chip 200, losing the blocking effect of the blocking plate 91. The chip 200 drops into the waste chip bin 70 through a through hole 93 formed in the blocking plate 91.

In step S60, the third drive assembly 92 is controlled to drive the blocking plate 91 to move away from the electrophoresis component 11, until the third elastic member resets to an initial position, causing the side edge of the blocking plate 91 to correspond to the bottom of the chip 200, thereby blocking a next chip 200.

In the description of the specification, references to the terms such as "an embodiment" , "some embodiments" , "schematic embodiments" , "examples" , "specific examples" , or "some examples" mean that the specific feature, structure, material, or characteristic described in connection with the embodiment or example is included in at least one embodiment or example of the present application. In the specification, the schematic description of the above terms does not necessarily refer to the same embodiment or example. Moreover, the specific feature, structure, material, or characteristic described may be combined in any one or more embodiments or examples in any appropriate manner.

Although the embodiments of the present application have been illustrated and described, it can be understood by those of ordinary skill in the art that various changes, modifications, replacements, and variations can be made to these embodiments without departing from the principle and purpose of the present application, and the scope of the present application is defined by the claims and equivalents thereof. The following are a series of sequentially numbered statements of the invention, not claims. (Claims follow on after these statements and are headed "CLAIMS" )
1. A sample analysis device, comprising:
   an electrophoresis mechanism, the electrophoresis mechanism comprising:
      an electrophoresis component, wherein the electrophoresis component comprises a probe, and the probe is configured to contact a chip to apply a voltage to the chip; and
      a mounting component, wherein the mounting component comprises a fixing base and a latching assembly; the latching assembly is movably connected to the fixing base, and the latching assembly is configured to abut against or separate from the electrophoresis component; when the latching assembly abuts against the electrophoresis component, the latching assembly locks the electrophoresis component on the mounting component; and when the latching assembly separates from the electrophoresis component, the electrophoresis component is capable of moving relative to the fixing base; and
   an imaging mechanism, the imaging mechanism being configured to, after electrophoretic separation of a sample in the chip is completed, photograph and image the sample.
2. A sample analysis device according to statement 1, wherein the latching assembly comprises a latching member and a connecting member; the connecting member is rotatably connected to the fixing base, and the latching member is configured to abut against or separate from the electrophoresis component.
3. A sample analysis device according to statement 2, wherein a sliding slot and an accommodating space are formed in the fixing base; the sliding slot is in communication with the accommodating space, the electrophoresis component is latched to the fixing base by means of the sliding slot, the electrophoresis component is at least partially located in the accommodating space, and the connecting member is at least partially located in the sliding slot.
4. A sample analysis device according to statement 3, wherein the fixing base comprises two opposite support arms; the sliding slot is formed between the two support arms, and the connecting member is rotatably mounted on the two support arms via a rotation shaft.
5. A sample analysis device according to statement 3, wherein the latching member protrudes from the connecting member toward the accommodating space, and/or the latching member protrudes from a top end of the fixing base.
6. A sample analysis device according to statement 3, wherein the fixing base comprises two opposite mounting bases; both of the two mounting bases are provided with the sliding slot, and the latching assembly is provided on at least one of the mounting bases.
7. A sample analysis device according to statement 3, wherein the electrophoresis component comprises a fixing plate, the probe is disposed on the fixing plate in a protruding manner, and the fixing plate is latched in the sliding slot.
8. A sample analysis device according to statement 7, wherein the electrophoresis component comprises a circuit board; the circuit board is disposed on the fixing plate and is located on a side, facing away from the probe, of the fixing plate, and the circuit board is electrically connected to the probe.
9. A sample analysis device according to statement 2, wherein a clearance surface is formed on a side, away from the latching member, of the connecting member, a clearance space is formed between the clearance surface and a side wall, close to the latching assembly, of the electrophoresis component, and the clearance space is configured to provide clearance for the connecting member to rotate.
10. A sample analysis device according to any one of statements 1 to 9, wherein the mounting component comprises a first elastic member; the first elastic member is connected to the latching assembly and is configured to exert an elastic force on the latching assembly, so that the latching assembly remains in a position latched with the electrophoresis component after an external force is removed.
11. A sample analysis device according to statement 10, wherein the mounting component comprises a limiting member disposed on the fixing base, and an end, away from the latching assembly, of the first elastic member abuts against the limiting member.
12. A sample analysis device according to any one of statements 1 to 11, wherein the imaging mechanism comprises a light source and a camera; the light source is configured to emit light toward the chip, and the camera is configured to photograph and image the sample in the chip.
13. A sample analysis device according to statement 12, wherein the imaging mechanism comprises a first drive assembly, and the first drive assembly drives the light source and the camera to move relative to the chip.
14. A sample analysis device according to any one of statements 1 to 13, comprising a motion mechanism, wherein the motion mechanism is configured to drive the chip to move, so as to push the chip to a sample loading station or an analysis station.
15. A sample analysis device according to statement 14, wherein the motion mechanism comprises a pressing plate and a second drive assembly connected to the pressing plate; the second drive assembly drives the pressing plate to move, so as to push the chip toward the electrophoresis mechanism to move to the sample loading station or the analysis station.
16. A sample analysis device according to statement 15, wherein the motion mechanism comprises a movable plate and a second elastic member; the movable plate is disposed between the electrophoresis mechanism and the pressing plate, the second elastic member connects the electrophoresis mechanism and the movable plate, and the second elastic member drives the movable plate to move, so as to push the chip located at the analysis station toward the pressing plate to move to the sample loading station.
17. A sample analysis device according to any one of statements 1 to 16, comprising a sample loading mechanism and a base plate, wherein the electrophoresis mechanism, the sample loading mechanism, and the imaging mechanism are all disposed on the base plate; the sample loading mechanism comprises a power component and a sample loader connected to the power component, and the power component drives the sample loader to move toward the sample, or drives the sample loader to move toward the chip.
18. A sample analysis device according to statement 17, wherein the power component comprises a first power assembly, a second power assembly disposed on the first power assembly, and a third power assembly disposed on the second power assembly; the sample loader is disposed on the third power assembly, the first power assembly drives the sample loader to move along a first direction, the second power assembly drives the sample loader to move along a second direction, and the third power assembly drives the sample loader to move along a third direction, the first direction, the second direction, and the third direction being perpendicular to each other.
19. A sample analysis device according to statement 17, comprising a bracket and a sample rack, wherein the bracket is fixed on the base plate, and the sample rack is detachably disposed on the bracket; the sample rack is provided with sample wells for accommodating the sample, a mouth is formed on each of the sample wells, and the sample loading mechanism is inserted into the sample well through the mouth.
20. A sample analysis device according to statement 19, wherein the bracket comprises a panel and two support members disposed opposite to each other; the panel is disposed on the two support members, holes are provided penetrating through the panel along a thickness direction, and the sample wells are inserted in the holes.
21. A sample analysis device according to statement 20, wherein a surface, facing the support members, of the panel extends outward to form a flange; the sample rack abuts against a surface, away from the support members, of the flange, or the sample rack abuts against a surface, away from the support members, of the panel.
22. A sample analysis device according to statement 20, wherein the sample rack comprises a first sample rack and a second sample rack; sample wells of the first sample rack are inserted in a portion of the holes, and sample wells of the second sample rack are inserted in all of the holes; a height of the mouth of the first sample rack is the same as a height of the mouth of the second sample rack.
23. A sample analysis device according to statement 17, comprising a waste chip bin, wherein the waste chip bin is disposed on a side, facing away from the sample loading mechanism, of the base plate, a via hole is formed in the base plate along a thickness direction, and the chip drops into the waste chip bin through the via hole.
24. A sample analysis device according to statement 23, comprising support legs and a tray, wherein the support legs are disposed perpendicular to the base plate, two adjacent support legs are connected by a connecting rod, the tray is slidably connected to the connecting rod, and the waste chip bin is fixed in the tray.
25. A sample analysis device according to statement 24, wherein a first side seat is disposed on the connecting rod, a first guide groove is provided on a side, facing the tray, of the first side seat, and a first rib is provided on a side, facing the first side seat, of the tray; the first rib is latched in the first guide groove, and the first rib slides along a length direction of the first guide groove.
26. A sample analysis device according to statement 25, wherein a first stopping part is disposed at an end part of the first guide groove, and the first stopping part is configured to limit a movement stroke of the first rib in the first guide groove.
27. A sample analysis device according to statement 24, comprising a guide rail, wherein a second side seat is disposed on the connecting rod, a second guide groove is provided on a side, facing the tray, of the second side seat, and a second rib is provided on a side, facing the second side seat, of the tray; the guide rail is latched in the second guide groove, and the guide rail slides along a length direction of the second guide groove; the second rib is latched in the guide rail, and the second rib slides along a length direction of the guide rail.
28. A sample analysis device according to statement 27, wherein a second stopping part is disposed at an end part of the second guide groove, and the second stopping part is configured to limit a movement stroke of the guide rail in the second guide groove.
29. A sample analysis device according to statement 27, wherein a third stopping part is provided at an end part of the guide rail, and the third stopping part is configured to limit a movement stroke of the second rib in the guide rail.
30. A sample analysis device according to statement 24, wherein a gripping part is disposed on the tray, and the tray is driven to move via the gripping part.
31. A sample analysis device according to any one of statements 1 to 30, comprising a blocking mechanism, wherein the blocking mechanism comprises a blocking plate and a third drive assembly; the blocking plate is connected to the third drive assembly, a through hole is formed in the blocking plate, and the third drive assembly drives the blocking plate to move toward or away from the electrophoresis component, so as to cause the chip to drop from the through hole into a waste chip bin or block the chip from dropping into the waste chip bin.
32. A sample analysis device according to statement 31, wherein the blocking mechanism comprises a third elastic member; one end of the third elastic member is connected to a base plate, the other end of the third elastic member is connected to the blocking plate, and the third elastic member drives the blocking plate to reset.
33. A control method, applicable to the sample analysis device according to any one of statements 1 to 32, the control method comprising:
   controlling the motion mechanism to drive the chip to move toward the electrophoresis component locked by the mounting component, and causing the probe to contact the chip;
   energizing the chip via the probe to cause the sample in the chip to undergo electrophoretic separation; and controlling the imaging mechanism to photograph and image the sample.
34. A control method according to statement 33, wherein before controlling the motion mechanism to drive the chip to move toward the electrophoresis component locked by the mounting component, the method comprises:
   controlling the sample loading mechanism to move toward the sample rack, and causing the sample loader of the sample loading mechanism to aspirate the sample from the sample well of the sample rack; and
   controlling the sample loading mechanism to move toward the chip, and causing the sample loader to add the sample into the chip.
35. A control method according to statement 33, wherein after controlling the imaging mechanism to photograph and image the sample, the method comprises:
   controlling the motion mechanism to drive the chip to move away from the electrophoresis component, so as to cause the probe to separate from the chip;
   driving the blocking plate to move toward the electrophoresis component by the third drive assembly, so as to cause the chip to drop into the waste chip bin; and
   driving the blocking plate to move away from the electrophoresis component by the third drive assembly, so as to cause the blocking plate to reset.

## Claims

1. A sample analysis device, comprising:
an electrophoresis mechanism, the electrophoresis mechanism comprising:
an electrophoresis component, wherein the electrophoresis component comprises a probe, and the probe is configured to contact a chip to apply a voltage to the chip; and
a mounting component, wherein the mounting component comprises a fixing base and a latching assembly;
the latching assembly is movably connected to the fixing base, and the latching assembly is configured to abut against or separate from the electrophoresis component; when the latching assembly abuts against the electrophoresis component, the latching assembly locks the electrophoresis component on the mounting component; and when the latching assembly separates from the electrophoresis component, the electrophoresis component is capable of moving relative to the fixing base; and
an imaging mechanism, the imaging mechanism being configured to, after electrophoretic separation of a sample in the chip is completed, photograph and image the sample.

2. The sample analysis device according to claim 1, wherein the latching assembly comprises a latching member and a connecting member; the connecting member is rotatably connected to the fixing base, and the latching member is configured to abut against or separate from the electrophoresis component.

3. The sample analysis device according to claim 2, wherein a sliding slot and an accommodating space are formed in the fixing base; the sliding slot is in communication with the accommodating space, the electrophoresis component is latched to the fixing base by means of the sliding slot, the electrophoresis component is at least partially located in the accommodating space, and the connecting member is at least partially located in the sliding slot;
optionally, wherein the fixing base comprises two opposite support arms; the sliding slot is formed between the two support arms, and the connecting member is rotatably mounted on the two support arms via a rotation shaft;
optionally, wherein the latching member protrudes from the connecting member toward the accommodating space, and/or the latching member protrudes from a top end of the fixing base;
optionally, wherein the fixing base comprises two opposite mounting bases; both of the two mounting bases are provided with the sliding slot, and the latching assembly is provided on at least one of the mounting bases;
optionally, wherein the electrophoresis component comprises a fixing plate, the probe is disposed on the fixing plate in a protruding manner, and the fixing plate is latched in the sliding slot;
optionally, wherein the electrophoresis component comprises a circuit board; the circuit board is disposed on the fixing plate and is located on a side, facing away from the probe, of the fixing plate, and the circuit board is electrically connected to the probe;
optionally, wherein a clearance surface is formed on a side, away from the latching member, of the connecting member, a clearance space is formed between the clearance surface and a side wall, close to the latching assembly, of the electrophoresis component, and the clearance space is configured to provide clearance for the connecting member to rotate.

4. The sample analysis device according to any one of claims 1 to 3, wherein the mounting component comprises a first elastic member; the first elastic member is connected to the latching assembly and is configured to exert an elastic force on the latching assembly, so that the latching assembly remains in a position latched with the electrophoresis component after an external force is removed.

5. The sample analysis device according to claim 4, wherein the mounting component comprises a limiting member disposed on the fixing base, and an end, away from the latching assembly, of the first elastic member abuts against the limiting member.

6. The sample analysis device according to any one of claims 1 to 5, wherein the imaging mechanism comprises a light source and a camera; the light source is configured to emit light toward the chip, and the camera is configured to photograph and image the sample in the chip.

7. The sample analysis device according to claim 6, wherein the imaging mechanism comprises a first drive assembly, and the first drive assembly drives the light source and the camera to move relative to the chip.

8. The sample analysis device according to any one of claims 1 to 7, comprising a motion mechanism, wherein the motion mechanism is configured to drive the chip to move, so as to push the chip to a sample loading station or an analysis station.

9. The sample analysis device according to claim 8, wherein the motion mechanism comprises a pressing plate and a second drive assembly connected to the pressing plate; the second drive assembly drives the pressing plate to move, so as to push the chip toward the electrophoresis mechanism to move to the sample loading station or the analysis station;
optionally, wherein the motion mechanism comprises a movable plate and a second elastic member; the movable plate is disposed between the electrophoresis mechanism and the pressing plate, the second elastic member connects the electrophoresis mechanism and the movable plate, and the second elastic member drives the movable plate to move, so as to push the chip located at the analysis station toward the pressing plate to move to the sample loading station.

10. The sample analysis device according to any one of claims 1 to 9, comprising a sample loading mechanism and a base plate, wherein the electrophoresis mechanism, the sample loading mechanism, and the imaging mechanism are all disposed on the base plate; the sample loading mechanism comprises a power component and a sample loader connected to the power component, and the power component drives the sample loader to move toward the sample, or drives the sample loader to move toward the chip.

11. The sample analysis device according to claim 10, wherein the power component comprises a first power assembly, a second power assembly disposed on the first power assembly, and a third power assembly disposed on the second power assembly; the sample loader is disposed on the third power assembly, the first power assembly drives the sample loader to move along a first direction, the second power assembly drives the sample loader to move along a second direction, and the third power assembly drives the sample loader to move along a third direction, the first direction, the second direction, and the third direction being perpendicular to each other;
optionally, comprising a bracket and a sample rack, wherein the bracket is fixed on the base plate, and the sample rack is detachably disposed on the bracket; the sample rack is provided with sample wells for accommodating the sample, a mouth is formed on each of the sample wells, and the sample loading mechanism is inserted into the sample well through the mouth;
optionally, wherein the bracket comprises a panel and two support members disposed opposite to each other; the panel is disposed on the two support members, holes are provided penetrating through the panel along a thickness direction, and the sample wells are inserted in the holes;
optionally, wherein a surface, facing the support members, of the panel extends outward to form a flange; the sample rack abuts against a surface, away from the support members, of the flange, or the sample rack abuts against a surface, away from the support members, of the panel;
optionally, wherein the sample rack comprises a first sample rack and a second sample rack; sample wells of the first sample rack are inserted in a portion of the holes, and sample wells of the second sample rack are inserted in all of the holes; a height of the mouth of the first sample rack is the same as a height of the mouth of the second sample rack;
optionally, comprising a waste chip bin, wherein the waste chip bin is disposed on a side, facing away from the sample loading mechanism, of the base plate, a via hole is formed in the base plate along a thickness direction, and the chip drops into the waste chip bin through the via hole;
optionally, comprising support legs and a tray, wherein the support legs are disposed perpendicular to the base plate, two adjacent support legs are connected by a connecting rod, the tray is slidably connected to the connecting rod, and the waste chip bin is fixed in the tray;
optionally, wherein a first side seat is disposed on the connecting rod, a first guide groove is provided on a side, facing the tray, of the first side seat, and a first rib is provided on a side, facing the first side seat, of the tray; the first rib is latched in the first guide groove, and the first rib slides along a length direction of the first guide groove;
optionally, wherein a first stopping part is disposed at an end part of the first guide groove, and the first stopping part is configured to limit a movement stroke of the first rib in the first guide groove;
optionally, comprising a guide rail, wherein a second side seat is disposed on the connecting rod, a second guide groove is provided on a side, facing the tray, of the second side seat, and a second rib is provided on a side, facing the second side seat, of the tray; the guide rail is latched in the second guide groove, and the guide rail slides along a length direction of the second guide groove; the second rib is latched in the guide rail, and the second rib slides along a length direction of the guide rail;
optionally, wherein a second stopping part is disposed at an end part of the second guide groove, and the second stopping part is configured to limit a movement stroke of the guide rail in the second guide groove; optionally, wherein a third stopping part is provided at an end part of the guide rail, and the third stopping part is configured to limit a movement stroke of the second rib in the guide rail;
optionally, wherein a gripping part is disposed on the tray, and the tray is driven to move via the gripping part.

12. The sample analysis device according to any one of claims 1 to 11, comprising a blocking mechanism, wherein the blocking mechanism comprises a blocking plate and a third drive assembly; the blocking plate is connected to the third drive assembly, a through hole is formed in the blocking plate, and the third drive assembly drives the blocking plate to move toward or away from the electrophoresis component, so as to cause the chip to drop from the through hole into a waste chip bin or block the chip from dropping into the waste chip bin.

13. The sample analysis device according to claim 12, wherein the blocking mechanism comprises a third elastic member; one end of the third elastic member is connected to a base plate, the other end of the third elastic member is connected to the blocking plate, and the third elastic member drives the blocking plate to reset.

14. A control method, applicable to the sample analysis device according to any one of claims 1 to 13, the control method comprising:
controlling the motion mechanism to drive the chip to move toward the electrophoresis component locked by the mounting component, and causing the probe to contact the chip;
energizing the chip via the probe to cause the sample in the chip to undergo electrophoretic separation; and controlling the imaging mechanism to photograph and image the sample.

15. The control method according to claim 14, wherein before controlling the motion mechanism to drive the chip to move toward the electrophoresis component locked by the mounting component, the method comprises:
controlling the sample loading mechanism to move toward the sample rack, and causing the sample loader of the sample loading mechanism to aspirate the sample from the sample well of the sample rack; and
controlling the sample loading mechanism to move toward the chip, and causing the sample loader to add the sample into the chip;
optionally, wherein after controlling the imaging mechanism to photograph and image the sample, the method comprises:
controlling the motion mechanism to drive the chip to move away from the electrophoresis component, so as to cause the probe to separate from the chip;
driving the blocking plate to move toward the electrophoresis component by the third drive assembly, so as to cause the chip to drop into the waste chip bin; and
driving the blocking plate to move away from the electrophoresis component by the third drive assembly, so as to cause the blocking plate to reset.
